# EUROPÄISCHE PATENTSCHRIFT

(11) **EP 2 685 142 B1**
(45) Veröffentlichungstag und Bekanntmachung des Hinweises auf die Patenterteilung: **12.08.2015**
(21) Anmeldenummer: 12005157.8
(22) Anmeldetag: 13.07.2012
(51) Int. Cl.: F16K 5/16

(54) **Kükenarmatur**
Tapered plug valve
Vanne à boisseau conique

(43) Veröffentlichungstag der Anmeldung: 15.01.2014
(73) Patentinhaber: Phönix Armaturen-Werke Bregel GmbH, 34471 Volkmarsen (DE)
(72) Erfinder: Wodara,Gunter, 34454 Bad Arolsen (DE); Jäger,Berthold, 37327 Leinefelde (DE); Becker,Rainer, 53773 Hennef (DE); Kellermann,Hannes, 34117 Kassel (DE)
(74) Vertreter: Walther, Walther & Hinz GbR

(56) Entgegenhaltungen:
- WO-A2-2009/005348
- DE-A1- 1 601 744
- DE-B- 1 153 254
- US-B1- 6 886 820

## Beschreibung

Die Erfindung betrifft eine Kükenarmatur umfassend ein in einem Gehäuse angeordnetes Küken, wobei das Küken mit einer Antriebseinrichtung zum Anheben und nachfolgenden Verdrehen des Kükens verbunden ist, wobei die Antriebseinrichtung ein Stellgehäuse mit einer in dem Stellgehäuse axial verschieblich und verdrehbar gelagerten Welle aufweist, wobei die Welle in axialer Richtung der Welle unter der Last einer Druckfeder steht. Eine Kükenarmatur der eingangs genannten Art ist aus dem Stand der Technik bekannt. Eine solche Kükenarmatur auch als Kükenhahn oder Kükenumschaltarmatur ausgebildet, wird an Stellen eingesetzt, an denen bei großen Kräften und hohen thermischen Belastungen das Verschließen einer Rohrleitung bzw. auch das Umschalten äußerst zuverlässig erfolgen muss. Hierzu dienen wie bereits ausgeführt die bekannten Kükenhähne bzw. Kükenumschaltarmaturen.

Ein bekannter Kükenhahn zeichnet sich dadurch aus, dass im Gehäuse das Küken durch eine Spindel zuerst aus seinem Sitz herausgezogen wird, dann verdreht wird, und dann wieder abgesenkt wird. Der Vorteil dieser Vorgehensweise besteht darin, dass der Verschleiß selbst bei hohen Kräften minimal ist. Eine Kükenumschaltarmatur arbeitet in ähnlicher Weise, auch hier wird das Küken zunächst aus dem ursprünglichen Sitz axial herausgehoben, dann verdreht, um dann wieder abgesenkt zu werden.

Bei größeren Kükenarmaturen, bei denen es auch insbesondere auf die Genauigkeit und Präzision beim Anheben und beim Verdrehen ankommt, ist die Verwendung von sogenannten Kugelschraubgetrieben bekannt. Über das Kugelschraubgetriebe wird zunächst das Küken angehoben, wobei dann in der oberen Endstellung durch eine Kugel des Kugelschraubgetriebes die weitere axiale Bewegung blockiert ist, und die auf das Kugelschraubgetriebe einwirkende Kraft zu einer Verdrehung des Kükens führt. Nach einer Verdrehung um ca. 90° fällt die Kugel aus der Kugelsperre heraus, das Küken kann wieder abgesenkt werden und der Vorgang kann von Neuem beginnen. Nachteilig an diesem bekannten Stand der Technik ist, dass die Kugeln insbesondere bei hohen thermischen Lastwechseln und hohen mechanischen Beanspruchungen einlaufen. Die Betriebssicherheit eines solchen Kükenhahnes ist dann nicht mehr gewährleistet.

WO 2009/005348 A2 offenbart eine Kükenarmatur gemäß dem Oberbegriff des Anspruchs 1.

Die der Erfindung zugrunde liegende Aufgabe besteht demzufolge darin eine Kükenarmatur der eingangs genannten Art bereitzustellen, die über lange Zeit verschleißfrei und äußerst zuverlässig funktioniert, und zwar baugrößenunabhängig und auch unabhängig von hohen thermischen Belastungen und insbesondere auch unabhängig von großen thermischen Lastwechseln.

Zur Lösung der Aufgabe wird erfindungsgemäß vorgeschlagen, dass die Antriebseinrichtung sowohl zum Anheben als auch zum Verdrehen des Kükens hydraulisch arbeitend ausgebildet ist,dass das Stellgehäuse eine erste Kammer bildet, wobei die Welle in der ersten Kammer lagert, wobei die Welle in der Kammer eine wirksame Fläche aufweist, wobei die Kammer mit einem Fluid beaufschlagbar ist, wobei bei Beaufschlagung der Kammer mit einem Fluid die Welle axial entgegen der Kraft der Druckfeder verschoben wird, wobei in axial verschobenem Zustand der Welle durch eine hydraulisch arbeitende Drehvorrichtung die Welle um einen Wert von ca. 90° verdrehbar ist.

Es wurde bereits an anderer Stelle darauf hingewiesen, dass eine Kükenarmatur sich dadurch auszeichnet, dass das Küken nicht im Sitz verdreht wird, sondern zunächst aus dem Sitz der Armatur gehoben wird, dann im freien Zustand verdreht wird, um dann im verdrehten Zustand wieder in den Sitz abgesenkt zu werden. Die hydraulisch arbeitende Antriebseinrichtung sorgt nun sowohl dafür, dass das Küken angehoben wird, als auch im zweiten Schritt durch diese hydraulisch arbeitende Einrichtung verdreht wird. Das heißt, dass der Druck zum Anheben des Kükens auch während der Verdrehung des Kükens aufrecht erhalten wird.

Die Antriebseinrichtung weist ein Stellgehäuse mit einer in dem Stellgehäuse axial verschieblich und verdrehbaren Welle auf. An der Welle befindet sich endseitig das Küken. Die Welle ragt mit dem Küken in die Rohrleitung hinein. Das heißt aber auch, dass sowohl die Axialbewegung des Kükens als auch die Drehbewegung des Kükens über die axiale Bewegung der Welle und die Verdrehung der Welle erfolgt.

Die Welle steht in axialer Richtung der Welle unter der Last einer Druckfeder. Hieraus wird deutlich, dass zunächst die Welle und mithin das Küken gegen die Kraft der Druckfeder angehoben werden, um dann in diesem Zustand verdreht zu werden. Nach Verdrehung wird dann aufgrund der Kraft der Druckfeder das Küken in den Sitz in der Rohrleitung gepresst. Das heißt, dass durch die mechanische Druckfeder die Kükenarmatur über eine relativ hohe Sicherheit verfügt, da durch die vorgespannte Druckfeder das Küken immer mit Sicherheit in den Sitz gelangt, selbst wenn die Hydraulik ausfallen sollte.

Die Drehvorrichtung umfasst ein auf der Welle angeordnetes Schaufelrad, das durch das Fluid in eine Drehbewegung versetzt wird. Hierbei liegt das Schaufelrad in einer weiteren Kammer des Stellgehäuses. Für die axiale Bewegung der Welle und die Verdrehung der Welle sind jeweils Endschalter vorgesehen. Das heißt, dass beim Ausheben des Kükens aus dem Sitz in der Armatur nach Durchlaufen eines vorbestimmten Hubes ein Endschalter betätigt wird, wobei dann die Drehbewegung eingeleitet wird, wobei dann nach Verdrehen um z. B. 90° das Küken wieder abgesetzt wird.

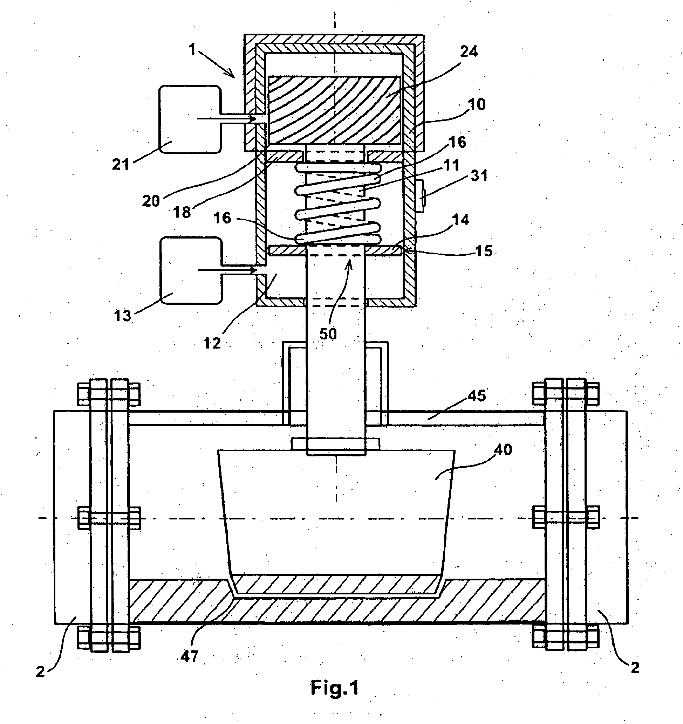

Anhand der Zeichnung wird die Erfindung nachstehend beispielhaft näher erläutert.

Die insgesamt mit 1 bezeichnete Kükenarmatur ist in der Rohrleitung 2 angeordnet. Die Kükenarmatur 1 umfasst ein sogenanntes Stellgehäuse 10, wobei das Stellgehäuse 10 eine Welle 11 axial verschieblich und verdrehbar aufnimmt. In diesem Zusammenhang zeigt die Welle im Bereich der ersten Kammer 12 die von einer Hydraulikpumpe 13 gespeist wird, einen umlaufenden Bund 14. Oberhalb des Bundes, der an der Welle 11 angeordnet ist, befindet sich eine Druckfeder 16. Diese Druckfeder 16 lagert an einem an der Wandung des Gehäuses 10 angeordneten umlaufenden Vorsprung 18, wobei oberhalb des Vorsprunges 18 eine weitere zweite Kammer 20 vorgesehen ist, wobei die Kammer 20 ebenfalls durch eine Hydraulikpumpe 21 gespeist wird. Die zweite Kammer 20 in Verbindung mit der Hydraulikpumpe 21 bildet zusammen mit dem Schaufelrad 24 eine Drehvorrichtung 27. Darüber hinaus befindet sich oberhalb des Bundes 14 im Gehäuse ein Endschalter 31, wobei ein zweiter Endschalter, der nach einer Verdrehung des Schaufelrades 24 um 90° anspricht, in der Zeichnung nicht dargestellt ist.

An der Welle 11 befindet sich am unteren Ende das Küken 40, wobei das Küken in dem Gehäuse der Armatur axial verschieblich und verdrehbar aufgenommen ist, das sich in der Rohrleitung 2 befindet. Das Gehäuse selbst ist mit 45 bezeichnet, der Sitz in dem Gehäuse 45 für das Küken zeigt das Bezugszeichen 47. Die Funktionsweise der Kükenarmatur ist nun derart, dass zunächst durch die Hydraulikpumpe 13 die Kammer 12 mit Druck beaufschlagt wird, indem beispielsweise Öl unter Druck in diese Kammer hineingepresst wird. Der Öldruck wirkt auf die Fläche des Bundes 14, sodass sich die Welle in Richtung des Pfeiles 50 verschiebt. Der Hub entspricht dem Abstand des Endschalters 31, von dem Bund 14 in der figürlichen Darstellung. Erreicht der Bund 14 den Schalter 13, ist mithin die Druckfeder 16 gegen den Vorsprung 18 vorgespannt, dann wird die Hydraulikpumpe 21 aktiviert, die ein Hydraulikfluid in die zweite Kammer 20 einführt. Auf der Welle 11 befindet sich das Schaufelrad 24, wobei das Schaufelrad 24 durch das Hydraulikfluid in Rotation versetzt wird. Nach einer Drehbewegung von ca. 90°, wird die erste Kammer 12 von dem Druck des Hydraulikfluids, das durch die Hydraulikpumpe 13 aufgebracht wurde, entlastet, sodass aufgrund der Vorspannung der Druckfeder 16 das Küken nach unten abgesenkt wird. Das Küken gelangt hierbei insofern wieder in seinen Sitz 47.

### Bezugszeichenliste:

- 1: Kükenarmatur
- 2: Rohrleitung
- 10: Stellgehäuse
- 11: Welle
- 12: erste Kammer
- 13: Hydraulikpumpe
- 14: umlaufender Bund
- 16: Druckfeder
- 18: Vorsprung
- 20: zweite Klammer
- 21: Hydraülikpumpe
- 24: Schaufelrad
- 27: Drehvorrichtung
- 31: Endschalter
- 40: Küken
- 45: Gehäuse
- 47: Sitz
- 50: Pfeil

## Patentansprüche

1. Kükenarmatur (1) umfassend ein in einem Gehäuse (45) angeordnetes Küken, wobei das Küken mit einer Antriebseinrichtung zum Anheben und nachfolgendem Verdrehen des Kükens verbunden ist, wobei die Antriebseinrichtung ein Stellgehäuse (10) mit einer in dem Stellgehäuse (10) axial verschieblich und verdrehbar gelagerten Welle (11) aufweist, wobei die Welle (11) in axialer Richtung der Welle (11) unter der Last einer Druckfeder (16) steht, wobei die Antriebseinrichtung sowohl zum Anheben als auch zum Verdrehen des Kükens hydraulisch arbeitend ausgebildet ist,
**dadurch gekenntzeichnet,**
dass das Stellgehäuse (10) eine erste Kammer (12) bildet, wobei die Welle (11) in der ersten Kammer (12) lagert, wobei die Welle (11) in der Kammer eine wirksame Fläche aufweist, wobei die Kammer mit einem Fluid beaufschlagbar ist, wobei bei Beaufschlagung der Kammer mit einem Fluid die Welle (11) axial entgegen der Kraft der Druckfeder (16) verschoben wird, wobei in axial verschobenem Zustand der Welle (11) durch eine hydraulisch arbeitende Drehvorrichtung (27) die Welle (11) um einen Wert von 90° verdrehbar ist.

2. Kükenarmatur (1) nach Anspruch 1,
**dadurch gekennzeichnet,**
**dass** die Drehvorrichtung (27) ein auf der Welle (11) angeordnetes Schaufelrad (24) umfasst.

3. Kükenarmatur (1) nach Anspruch 2,
**dadurch gekennzeichnet,**
**dass** das Schaufelrad (24) in einer weiteren zweiten Kammer (20) des Stellgehäuses (10) angeordnet ist.

## Claims

1. A cock fitting (1) comprising a cock plug disposed in a housing (45), wherein the cock plug is connected to a drive arrangement for lifting and subsequent rotation of the cock plug, wherein the drive arrangement has a control housing (10) with a shaft (11) mounted in the control housing (10) so as to be axially displaceable and rotatable, wherein the shaft (11) is under the load of a pressure spring (16) in the axial direction of the shaft (11), wherein the drive arrangement is configured to operate hydraulically for lifting as well as for rotating the cock plug,
**characterized in that**
the control housing (10) forms a first chamber (12), wherein the shaft (11) is mounted in the first chamber (12), wherein the shaft (11) has a working surface in the chamber, wherein the chamber is chargeable with a fluid, wherein the shaft (11) is displaced axially against the force of the pressure spring (16) when the chamber is charged with a fluid, wherein in the axially displaced state of the shaft (11), the shaft (11) is rotatable by a value of 90° by a hydraulically operating rotating device (27).

2. The cock fitting (1) according to claim 1,
**characterized in that**
the rotating device (27) comprises a paddle wheel (24) disposed on the shaft (11).

3. The cock fitting (1) according to claim 2,
**characterized in that**
the paddle wheel (24) is disposed in another second chamber (20) of the control housing (10).

## Revendications

1. Armature de robinet à boisseau (1) comportant un robinet logé dans un boîtier (45), dans laquelle le robinet est couplé avec une installation d'entraînement agencée pour soulever et ensuite pour tourner le robinet, dans laquelle l'installation d'entraînement comporte une boîte de réglage (10) pourvue d'un arbre (11) monté sur paliers, mobile en translation axiale à l'intérieur de la boîte de réglage (10), dans laquelle l'arbre (11) est soumis, dans la direction axiale, à la contrainte d'un ressort de poussée (16), dans laquelle l'installation d'entraînement est agencée à la fois pour soulever et ensuite pour tourner le robinet en opérant hydrauliquement,
**caractérisée en ce que,**
la boîte de réglage (10) forme une première chambre (12), dans laquelle l'arbre (11) est disposé dans la première chambre (12), dans laquelle l'arbre (11) présente une surface active dans la chambre, dans laquelle la chambre peut être soumise à l'effet d'un fluide, dans laquelle la soumission de la chambre à l'effet du fluide déplace l'arbre (11) axialement à l'encontre de la force du ressort de poussée (16), dans laquelle, dans la position axialement déplacée de l'arbre (11), ledit arbre (11) peut être tourné d'un angle ayant une valeur de 90° par une commande hydraulique de mise en rotation (27).

2. Armature de robinet à boisseau (1) selon la revendication 1,
**caractérisée en ce que**,
la commande hydraulique de mise en rotation (27) comporte une roue à aube (24) montée sur l'arbre (11).

3. Armature de robinet à boisseau (1) selon la revendication 2,
**caractérisée en ce que**,
la roue à aube (24) est disposée dans une seconde chambre (20) de la boîte de réglage (10).
